Europäisches Patentamt

European Patent Office

Office européen des brevets

(11) Publication number: **0 098 812**
**B1**

## EUROPEAN PATENT SPECIFICATION

(45) Date of publication of patent specification: **19.02.86**

(21) Application number: **83830131.5**

(22) Date of filing: **24.06.83**

(51) Int. Cl.⁴: **B 60 G 21/04**, B 60 G 11/08

(54) **Independent wheel suspension for motor vehicles.**

(30) Priority: **01.07.82 IT 6783482**

(43) Date of publication of application:
**18.01.84 Bulletin 84/03**

(45) Publication of the grant of the patent:
**19.02.86 Bulletin 86/08**

(84) Designated Contracting States:
**DE FR GB SE**

(56) References cited:
**DE-A-1 480 441**
**FR-A-1 072 946**
**FR-A-1 135 801**
**FR-A-2 102 245**
**US-A-2 977 132**
**US-A-3 479 050**
**US-A-3 773 349**

(73) Proprietor: **CORINT S.r.l.**
**Strada degli Alberoni 18/2**
**I-10133 Torino (IT)**
(73) Proprietor: **GARRIG 4 S.s.**
**Via Rivoli 55**
**I-10090 Rosta (Torino) (IT)**

(72) Inventor: **Cordiano, Ettore**
**Strada degli Alberoni 18/2**
**I-10133 Torino (IT)**
Inventor: **Garnero, Pierino**
**Via Rivoli 55**
**I-10090 Rosta (Torino) (IT)**

(74) Representative: **Notaro, Giancarlo et al**
**c/o Jacobacci-Casetta & Perani S.p.A. Via Alfieri,**
**17**
**I-10121 Torino (IT)**

Courier Press, Leamington Spa, England.

## Description

The present invention relates to an independent wheel rear suspension for motor vehicles of the kind comprising:

A wishbone for each wheel with a substantially transversal to the vehicle oscillation axis,

A torsion bar springing medium for each wishbone, every wishbone being made up of a longitudinal and a diagonal member connected one to the other in proximity of the wheel spindle and with their opposite ends hinged to vehicle body.

Wheel suspension of this kind are known and largely adopted on the modern motor vehicles. They give the advantage to occupy a limited space making easier the installation of fuel tank and spare wheel, and to enable the vehicle rear floor to be lowered. On the other side they bring to rather costly solutions, essentially because of the torsion bar, for its attachments to the wishbone and to the body, and because of the wishbone itself which has to transmit the vertical loads to the bar as twisting moments and has to withstand the torsion given by the moment of the side forces, exerted by the ground against the wheel, with respect of the centroid of the sections of the same wishbone. In addition, the bars of the two wheels must generally be longer than the half track in order to give the flexibility required for the suspension with acceptable stresses and therefore the problem exists of their reciprocal interference, so that it is often necessary to adopt different wheelbases between one and the other side of the vehicle.

In order to solve these problems, torsion bars have been sometimes adopted consisting of a leaf spring with rectangular cross section, more often a plurality of leaves, which enable to obtain a sufficient spring rate with a length lower than the half track; such solutions also simplify the attachment of the torsion bars to the body and wishbone respectively.

A particular solution is proposed by the Swiss Patent No. 336703, where a plurality of vertical leaves has simultaneously the function of torsion bar and of complete wishbone, able to anchor the wheel in all directions. To obtain this result, a horizontal leaf, suitably shaped, is added, which is sufficiently rigid to bear the lateral forces.

Such solutions, with one or more leaves, are still more expensive than those with cylindrical torsion bars and therefore they do not have any significant applications on mass production vehicles.

The object of the present invention is to avoid these problems and to realize a suspension which gives the same above mentioned advantage of space requirements but without the cost problems involved with the bars of traditional kind.

The object is attained through the invention in that the torsion bar of each wheel consists of a spring leaf with a substantially rectangular cross section, whose longer side is vertically disposed, the ends of said leaf being bent in such a way as to form two branches, one of which is located in a substantially transversal direction and works as torsion bar, and the other branch is substantially longitudinal and is connected, directly or through an intermediate member, to the wheel spindle and to the diagonal member of the wishbone, the transversal branch being hingedly connected to the vehicle body near its junction with the longitudinal branch, and thus the longitudinal branch, with or without the intermediate member, is working as longitudinal member of the wishbone, longitudinally anchoring the wheel and transmitting to the leaf transversal branch the twisting moments given by the vertical loads acting on the wheel, and the wheel being transversally anchored only by the diagonal member.

A further simplification is obtained, with a consequent cost and weight reduction, by eliminating at all the intermediate member and clamping the leaf longitudinal branch directly on the diagonal member and this to the wheel spindle.

The invention will now be described with reference to the accompanying figures, of which:

Fig. 1 shows a suspension viewed in plan with a box trailing arm to which the leaf and wheel spindle are fastened,

Fig. 2 is a transversal view of the same suspension,

Fig. 3 shows a variation of the same suspension, with the diagonal member clamped on the longitudinal member,

Fig. 4 shows a solution without intermediate member and with the spindle fixed on the diagonal member,

Figs. 5, 6 show in detail the central attachment of diagonal member and leaf,

Fig. 7 shows a possible lateral connection of the leaf to the body.

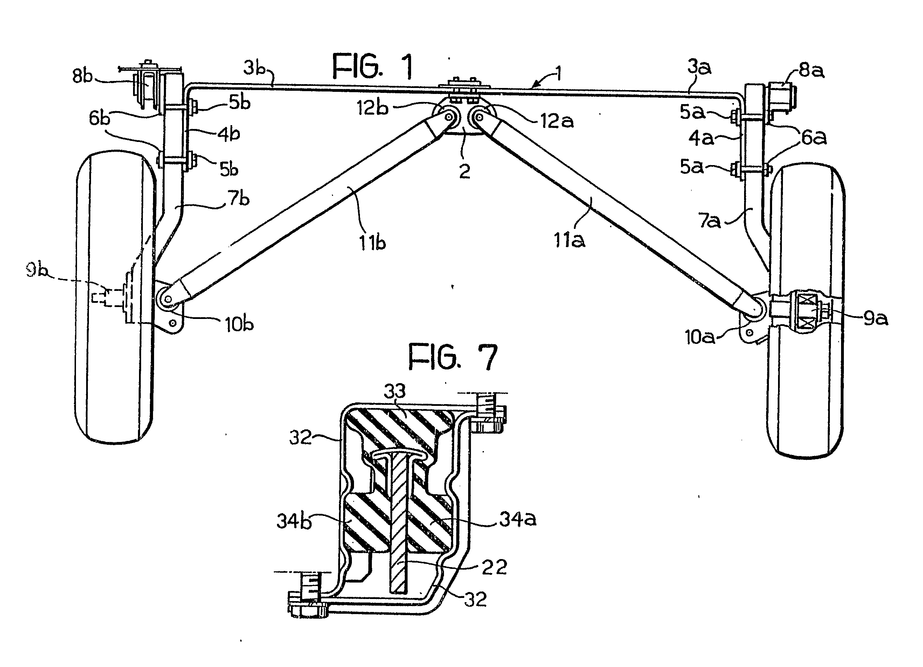

With reference to Fig. 1, the transversal leaf, having a rectangular cross section with the higher side of the rectangle vertically disposed, is clamped in the vehicle middle through mounting 2 and is bent on both sides in such a way as to form transversal branches 3a, 3b and longitudinal branches 4a, 4b. These latter are clamped by means of bolts 5a, 5b and plates 6a, 6b, on longitudinal members 7a, 7b, which are connected to the body by rubber bushing 8a, 8b and bear, on their opposite ends, wheel spindles 9a, 9b. To the same longitudinal members 7a, 7b, through rubber elements 10a, 10b, two diagonal members 11a, 11b are connected which, on their opposite ends, are hingedly connected to the body through rubber elements 12a, 12b.

The suspension works as follows.

The whole of the swinging arm of a wheel, for example the right one, constituted by longitudinal member 7a, longitudinal branch 4a of the leaf, and diagonal member 11a, swings about the axis extending through joints 8a, 12a. The vertical loads acting on the wheels are transmitted to the body via longitudinal member 7a, leaf longitudinal branch 4a and therefrom, as twisting moments, to transversal branch 3a. The braking torque is borne by longitudinal member 7a, by vertical reactions of bushing 8a.

Ground lateral forces are borne in cooperation by longitudinal member 7a and diagonal member 11a. The moments of the same lateral forces with respect to the centroid of member 7a section, that are twisting moments for said member are transmitted by it to leaf transversal branch 3a, which is therefore bending stressed in the vertical plane. Because its rectangular cross section with a high ratio between the two sides, the leaf can easily bear this bending moment while, by suitably fixing the dimensions of its section, the required ride rate of the suspension can be obtained with length of transversal branches comprised within the half width of the vehicle, even with acceptable strains.

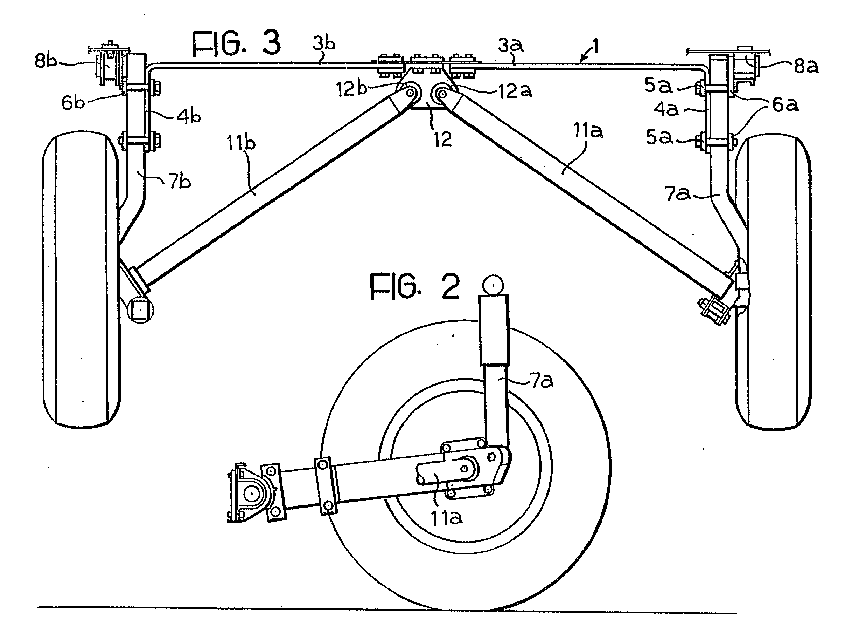

Fig. 2 shows the same suspension in transversal view.

In Fig. 3, on the contrary, a suspension of the same kind is illustrated wherein the diagonal members are clampedly instead of hingedly connected to the longitudinal members. This way the result is obtained of making said diagonal members to bear part of the twisting moments of the lateral forces on the longitudinal members, and consequently the dimensions of these latter can be reduced and hence the total suspension weight.

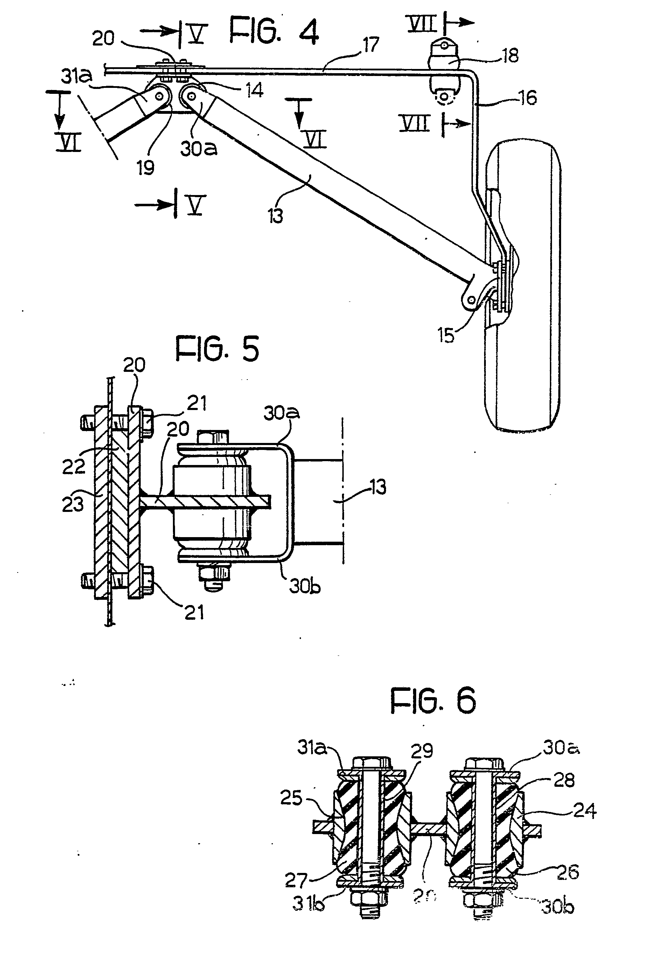

Fig. 4 shows the right side of a suspension of the same kind where the longitudinal member is missing. Diagonal member 13 is hingedly connected to the body through bushing 14 and is provided, on the opposite end, with a welded flange 15, to which the wheel spindle and the extremity of leaf longitudinal branch 16 are clamped. Transversal branch 17 is clamped in vehicle middle and resiliently connected to the body in proximity of its junction with longitudinal branch 16, through rubber mounting 18.

Under these conditions the suspension operates as follows.

The suspension wishbone is practically made up of longitudinal branch 16 of the leaf and diagonal member 13. The wishbone swings by rotating about the axis extending through bushing 14 and mounting 18. The vertical load is transmitted by longitudinal branch 16 to transversal branch 17 as twisting moment. The moment of the lateral loads with respect to the wheel center is absorbed in cooperation by diagonal member 13 and longitudinal branch 16.

The braking torque is borne directly by longitudinal branch 16.

Figs. 5, 6 are two sections of a possible embodiment of the central mounting of the leaf and of two bushings 14, 19 connecting the diagonal members to the body. Plate 20, locked by bolts 21, clamps leaf 22 against brackets 23 fastened to the vehicle floor. Outer rings 24, 25 of bushings 26, 27 are welded to the sample plate, and bushings inner tubes 28, 29 are fixed to extensions 30a, 30b, 31a, 31b welded to the diagonal members.

Fig. 7 shows a possible embodiment of lateral resilient mounting of leaf transversal branch. The mounting is made up of a metallic structure 32 which contains block 33, bearing the vertical loads transmitted by leaf 22, and two blocks 34a, 34b bearing the horizontal longitudinal loads. During the suspension deflections the leaf rotates approximately about its section centre.

## Claims

1. Independent wheel suspension for motor vehicles of the kind comprising:

A wishbone (7a, 11a, 7b, 11b) for each wheel with a substantially transversal to the vehicle oscillation axis,

A torsion bar (1) springing medium for each wishbone, every wishbone being made up of a longitudinal (7a, 7b) and a diagonal (11a, 11b) member connected one to the other in proximity of the wheel spindle (9a, 9b) and with their opposite ends (8a, 8b, 12a, 12b) hinged to the vehicle body, characterized in that the torsion bar of each wheel consists of a spring leaf (1) with a substantially rectangular cross section, whose longer side is vertically disposed, the ends of said leaf being bent in the horizontal plane in such a way as to form two branches (3a, 4a, 3b, 4b), one of which is located in a substantially transversal direction and works as torsion bar, and the other branch is substantially longitudinal and is connected, directly or through an intermediate member, to the wheel spindle (9a, 9b) and to the above said diagonal member (11a, 11b), the transversal branch being hingedly (8a, 8b) connected to the vehicle body near its junction with the longitudinal branch (4a, 4b), and thus the longitudinal branch, with or without the intermediate member, works as the longitudinal member of the wishbone, longitudinally anchoring the wheel and transmitting to the leaf transversal branch the twisting moments given by the vertical loads acting on the wheel and the wheel being transversally anchored only by the diagonal member (11a, 11b).

2. Independent wheel suspension for motor vehicles as in claim 1 characterized in that the longitudinal intermediate member consists of a box section member to which, through suitable fixation means, the leaf longitudinal branch is clamped, said intermediate longitudinal member bearing on one end the wheel spindle and on the other end its hinge of connection to the body, its connection on the diagonal member being realized by means of a resilient device.

3. Independent wheel suspension for motor vehicles as in claim 2 characterized in that the connection of the intermediate longitudinal member to the diagonal member is of the clamp kind in such a way that the diagonal member bears by bending a part of the twisting moment acting on the longitudinal intermediate member, i.e. the moment of the lateral ground forces with respect to the centroid of the same intermediate member.

4. Independent wheel suspension for motor vehicles as in claim 1, characterized in that the wheel spindle is borne by the diagonal member, to which the leaf longitudinal branch is clamped in proximity of the wheel, said longitudinal branch thus assuming the functions of a) longitudinally guiding the wheel, b) transmitting the vertical loads to the leaf transversal branch as twisting moment, and c) bearing the braking torques.

5. Independent wheel suspension for motor vehicles as in claims from 1 to 4 characterized in that the leaves of the two wheels are parts of a single leaf, transversally mounted and clamped in the vehicle middle, whose ends are bent to form the longitudinal branches relative to each wheel.

**Revendications**

1. Suspension à roues indépendantes pour véhicules à moteur du genre comprenant:

— un triangle de suspension (7a, 11a, 7b, 11b) pour chaque roue à un axe d'oscillation sensiblement transversal au véhicule,
— un milieu d'élasticité de barre de torsion (1) pour chaque triangle de suspension, chaque triangle de suspension étant fait d'éléments longitudinal (7a, 7b) et diagonal (11a, 11b) reliés l'un à l'autre à proximité de la fusée de roue (9a, 9b) et dont les extrémités opposées (8a, 8b, 12a, 12b) sont articulés sur la caisse de véhicule, caractérisé en ce que la barre de torsion de chaque roue est composée d'une lame de ressort (1) à section sensiblement rectangulaire, dont le grand côté est disposé verticalement, les extrémités de ladite lame étant coudées dans le plan horizontal de manière à former deux branches (3a, 4a, 3b, 4b), dont l'une est placée dans une direction sensiblement transversale et travaille en barre de torsion, et l'autre branche est sensiblement longitudinale et est reliée, directement ou par le truchement d'un élément intermédiaire, à la fusée de roue (9a, 9b) et à l'élément diagonal précité (11a, 11b), la branche transversale étant reliée par articulation (8a, 8b) à la caisse du véhicule près de sa jonction avec la branche longitudinale (4a, 4b), et ainsi la branche longitudinale travaille, avec ou sans l'élément intermédiaire, en tant qu'élément longitudinal du triangle de suspension, ancrant longitudinalement la roue et transmettant à la branche transversale de la lame les moments de torsion donnés par les charges verticales agissant sur la roue, et la roue étant transversalement ancrée par l'élément diagonal (11a, 11b).

2. Suspension à roues indépendantes pour véhicules à moteur selon la revendication 1, caractérisée en ce que l'élément intermédiaire longitudinal est composé d'un profilé en caisson sur lequel est cramponnée, par des moyens de fixation convenables, la branche longitudinale de la lame, ledit élément longitudinal intermédiaire portant sur une extrémité la fusée de roue et sur l'autre extrémité son articulation de raccordement avec la caisse, son raccordement avec l'élément diagonal étant réalisé au moyen d'un dispositif élastique.

3. Suspension à roues indépendantes pour véhicules à moteur selon la revendication 2, caractérisée en ce que le raccordement de l'élément longitudinal intermédiaire avec l'élément diagonal est du genre crampon de sorte que l'élément diagonal supporte par flexion une partie du moment de torsion agissant sur l'élément intermédiaire longitudinal, c'est-à-dire le moment des efforts au sol latéraux par rapport au centroïde du même élément intermédiaire.

4. Suspension à roues indépendantes pour véhicules à moteur selon la revendication 1, caractérisée en ce que le fusée de roue est portée par l'élément diagonal, sur lequel la branche longitudinale de la lame est cramponnée à proximité de la roue, ladite branche longitudinale assumant ainsi les fonctions de a) guider longitudinalement la roue, b) transmettre les charges verticales à la branche transversale de la lame en tant que moment de torsion, et c) supporter les couples de freinage.

5. Suspension à roues indépendantes pour véhicules à moteur selon la revendications 1 à 4, caractérisé en ce que les lames des deux roues font partie d'une seule lame, montée transversalement et cramponnée au milieu du véhicule, dont les extrémités sont coudées pour former les branches longitudinales par rapport à chaque roue.

**Patentansprüche**

1. Einzelradaufhängung für Kraftfahrzeuge mit einem Querlenker (7a, 11a, 7b, 11b) für jedes Rad mit im wesentlichen quer zum Fahrzeug verlaufender Schwenkachse, mit einem als Torsionsstab (1) ausgebildeten Federmedium für jeden Querlenker, wobei jeder Querlenker aus einem Längs- und einem Diagonalglied (7a, 7b bzw. 11a, 11b) besteht, die in der Nähe des Achsschenkels (9a, 9b) des Rades miteinander verbunden und mit ihren entgegengesetzten Enden (8a, 8b, 12a, 12b) an dem Fahrzeugkörper angelenkt sind, dadurch gekennzeichnet, daß der Torsionsstab jedes Rades aus einer Blattfeder (1) mit im wesentlichen rechteckigem Querschnitt besteht, dessen längere Seite vertikal angeordnet ist, daß die Enden der Blattfeder in der horizontalen Ebene derart abgewinkelt sind, daß sie zwei Arme (3a, 4a, 3b, 4b) bildet, von denen der eine als Querarm in einer im wesentlichen transversalen Richtung verläuft und als Torsionsstab wirkt, und der andere als Längsarm in einer im wesentlichen longitudinalen Richtung angeordnet und direkt oder über ein Zwischenglied mit dem Achsschenkel (9a, 9b) des Rades und dem genannten Diagonalglied (11a, 11b) verbunden ist,

daß der Querarm (3a, 3b) in der Nähe seiner Verbindungsstelle mit dem Längsarm Arm (4a, 4b) gelenkig (8a, 8b) mit dem Fahrzeugkörper verbunden ist, so daß der Längsarm das Längsglied des Querlenkers bildet und das Rad in Längsrichtung verankert und die durch die auf das Rad einwirkenden vertikalen Belastungen gegebenen Torsionsmomente auf den transversalen Arm der Blattfeder überträgt,

und daß das Rad in transversaler Richtung lediglich durch das Diagonalglied (11a, 11b) verankert ist.

2. Einzelradaufhängig für Kraftfahrzeuge nach Anspruch 1, dadurch gekennzeichnet,

daß das dem Längsarm zugeordnete Zwischengleid ein Glied mit Kastenquerschnitt ist, an welchem der Längsarm der Blattfeder mit Hilfe geeigneter Befestigungsmittel festgelegt ist,

und daß das Zwischenglied an einem Ende den Achsschenkel des Rades und an dem anderen Ende sein Gelenk für die gelenkige Verbindung mit dem Fahrzeugkörper trägt, wobei seine Verbindung mit dem Diagonalglied durch eine elastische Vorrichtung hergestellt ist.

3. Einzelradaufhängung für Kraftfahrzeuge nach Anspruch 2, dadurch gekennzeichnet, daß die Verbindung des dem Längsglied zugeordneten Zwischengliedes mit dem Diagonalglied eine Klemmverbindung ist, so daß das Diagonalglied durch Biegung einen Teil des auf des Zwischenglied einwirkenden Torsionsmoments, d.h. des Moments der lateralen Bodenkräfte relativ zu dem Massenzemtrum des Zwischenglieds, aufnimmt.

4. Einzelradaufhängung für Kraftfahrzeuge nach Anspruch 1, dadurch gekennzeichnet, daß der Achsschenkel des Rades von dem Diagonalglied getragen ist, an welchem der Längsarm der Blattfeder in der Nähe des Rades befestigt ist, derart daß der Längsarm die Funktionen a) der Längsführung des Rades, b) der Übertragung der vertikalen Kräfte als Torsionsmoment auf den Querarm der Blattfeder und c) der Aufnahme der Bremsmomente in sich vereinigt.

5. Einzelradaufhängung für Kraftfahrzeuge nach einem der Ansprüche 1 bis 4, dadurch gekennzeichnet, daß die Blattfedern der beiden Räder Teile einer einzigen Blattfeder sind, die in Querrichtung des Fahrzeugs montiert und in der Fahrzeugmitte befestigt ist und deren Enden abgewinkelt sind und die Längsarme für die einzelnen Räder bilden.

FIG. 1

FIG. 7

0 098 812

FIG. 3

FIG. 2

0 098 812

# FIG. 4

# FIG. 5

# FIG. 6